# EUROPEAN PATENT SPECIFICATION

(11) **EP 4 556 203 B1**
(45) Date of publication and mention of the grant of the patent: **21.10.2026**
(21) Application number: 24223086.0
(22) Date of filing: 03.01.2023
(51) Int. Cl.: B29C 65/32, B29C 65/36, B29C 65/18, B29L 31/30

(54) **INDUCTION WELDING OF THERMOPLASTICS WITH METALLIC STRIPS**
INDUKTIONSSCHWEISSEN VON THERMOPLASTEN MIT METALLBÄNDERN
SOUDAGE PAR INDUCTION DE THERMOPLASTIQUES AVEC DES BANDES MÉTALLIQUES

(30) Priority: 03.01.2022 US 202217567750
(43) Date of publication of application: 21.05.2025
(62) Document number(s) of the earlier application(s) in accordance with Art. 76 EPC: 23150203.0 / 4 212 315
(73) Proprietor: Rohr, Inc., Chula Vista, CA 91910-2098 (US)
(72) Inventor: MITROVIC, Milan, Del Mar, 92014 (US); HUANG, Jonathan S., Pasadena, 91101 (US); van TOOREN, Michael, San Diego, 92122 (US)
(74) Representative: Dehns

(56) References cited:
- WO-A1-2021/018915
- CN-A- 1 103 355
- SE-C2- 503 509

## Description

### FIELD

The present disclosure (invention) relates generally to induction welding of thermoplastic composite structures, and more specifically to systems and methods for induction welding a stiffener to a thermoplastic composite structure using a metallic strip.

### BACKGROUND

Many aircraft thermoplastic composite structures are formed using stiffeners or substructures to reinforce or "stiffen" the structure. These stiffeners typically provide the structure with resistance to compression buckling or bending, making the structure desirably less flexible in response to shearing, tensile, or compressive stress, or the like. These stiffeners may be joined to the thermoplastic structure by induction welding. Induction welding utilizes electromagnetic induction to heat a workpiece. An induction coil is energized with an alternating electric current which generates an electromagnetic field that heats a workpiece and binds it to a thermoplastic structure. As a stiffener is laid up in a thermoplastic structure, induction welding can generate eddy currents which may heat the edges of the stiffener and thermoplastic structure at higher than desirable temperatures, which may damage the thermoplastic structure.

SE 503,509 C2 discloses a process for induction welding laminates arranged side-by-side, with a metal strip located on the opposite side of the laminates to the inductor and a plastic layer provided between the metal strip and laminates.

CN 1,103,355 A discloses a method for making hollow tubes.

WO 2021/018915 A1 discloses the production of collapsible pouches having a fitment.

### SUMMARY

According to an aspect of the present invention, there is provided a method of joining a first workpiece to a second workpiece, The method comprises induction welding the first workpiece to the second workpiece. The second workpiece at least partially overlays the first workpiece. The second workpiece comprises an embedded metallic strip, for example a mesh, at a welding region. The induction welding occurs at a welding region. The induction welding further comprises operating an induction welding tool at the welding region. The tool comprises an induction welding tool surface. The induction welding tool surface is located proximate the second workpiece. The induction welding further comprises energizing a coil located proximate the first workpiece. The coil is configured to energize with an electric current. The energized coil is configured to generate an electromagnetic field. The electromagnetic field is configured to induce a current which heats the first workpiece and the second workpiece at the welding region. The heat generated by the coil is configured to weld, by the induction welding tool, the second workpiece to the first workpiece at the welding region.

Optionally, the induction welding may further comprise induction welding a thermoplastic composite structure to the second workpiece. In various embodiments, the thermoplastic composite structure may comprise a skin. In various embodiments, the skin may be configured to weld to the second workpiece.

Optionally, induction welding the thermoplastic composite structure to the second workpiece may further comprise induction welding the thermoplastic composite structure to a stiffener.

Optionally, induction welding the thermoplastic composite structure to the stiffener further comprises the stiffener comprising a stiffener cap. The stiffener may further comprise a stiffener web. In various embodiments, the stiffener may comprise a stiffener flange. In various embodiments, the stiffener flange may be configured to weld to the thermoplastic composite structure.

Optionally, induction welding the stiffener flange to the thermoplastic composite structure further comprises the stiffener flange at least partially overlaying the skin of the thermoplastic composite structure. In various embodiments, the stiffener flange may be configured to weld to the skin of the thermoplastic composite structure at the welding region.

Optionally, induction welding the stiffener flange to the skin may further comprise energizing the coil. In various embodiments, the energized coil may be configured to generate the electromagnetic field. In various embodiments, the electromagnetic field may be configured to induce an electric current which heats the stiffener flange and the skin at the welding region. In various embodiments, the heat generated by the coil may be configured to weld, by the induction welding tool, the stiffener flange to the skin at the welding region.

Optionally, induction welding the stiffener flange to the skin may further comprise the stiffener flange comprising the embedded metallic strip (e.g. the mesh) at the welding region.

According to another aspect of the present invention, there is provided a method of joining a first workpiece to a second workpiece. The method comprises induction welding the first workpiece to the second workpiece. The second workpiece at least partially overlays the first workpiece. A polymer tape at least partially overlays the second workpiece. The polymer tape is disposed between the second workpiece and a metallic strip, for example a mesh. The welding occurs at a welding region. The induction welding further comprises operating an induction welding tool at the welding region. The tool comprises an induction welding tool surface. The induction welding tool surface is located proximate the second workpiece. The induction welding further comprises energizing a coil located proximate the first workpiece. The coil is configured to energize with an electric current. The energized coil is configured to generate an electromagnetic field. The electromagnetic field is configured to induce a current which heats the first workpiece and the second workpiece at the welding region. The heat generated by the coil is configured to weld, by the induction welding tool, the second workpiece to the first workpiece at the welding region. The metallic strip is configured to conduct the heat generated by the coil uniformly across the welding region. The method further comprises removing the polymer tape from the second workpiece after induction welding.

Optionally, induction welding the first workpiece to the second workpiece may further comprise induction welding a thermoplastic composite structure to the second workpiece. In various embodiments, the thermoplastic composite structure may comprise a skin. In various embodiments, the skin may be configured to weld to the second workpiece.

Optionally, induction welding the thermoplastic composite structure to the second workpiece may further comprise induction welding the thermoplastic composite structure to a stiffener.

Optionally, induction welding the thermoplastic composite structure to the stiffener further comprises the stiffener comprising a stiffener cap. The stiffener may further comprise a stiffener web. In various embodiments, the stiffener may comprise a stiffener flange. In various embodiments, the stiffener flange may be configured to weld to the thermoplastic composite structure.

Optionally, induction welding the stiffener flange to the thermoplastic composite structure further comprises the stiffener flange at least partially overlaying the skin of the thermoplastic composite structure. In various embodiments, the stiffener flange may be configured to weld to the skin of the thermoplastic composite structure at the welding region.

Optionally, induction welding the stiffener flange to the skin at the welding region may further comprise disposing the polymer tape at the welding region. In various embodiments, the polymer tape may at least partially overlay the stiffener flange.

Optionally, induction welding the stiffener flange to the skin may further comprise energizing the coil. In various embodiments, the energized coil may be configured to generate the electromagnetic field. In various embodiments, the electromagnetic field may be configured to induce a current which heats the stiffener flange and the skin at the welding region. In various embodiments, the heat generated by the coil may be configured to weld, by the induction welding tool, the stiffener flange to the skin at the welding region.

Optionally, induction welding the stiffener flange to the skin at the welding region may further comprise the metallic strip. In various embodiments, the metallic strip may be a mesh fixed to the induction welding tool surface.

Optionally, induction welding the stiffener flange to the skin at the welding region may further comprise the polymer tape. In various embodiments, the polymer tape may be disposed between the stiffener flange and the metallic strip.

In various embodiments, the polymer tape may be configured to be removed from the stiffener flange after induction welding.

According to another aspect of the present invention, there is provided an induction welding apparatus. The apparatus comprises a first workpiece, a second workpiece, an induction welding tool, and a coil. The second workpiece comprises an embedded metallic strip, for example a mesh, at a welding region. The metallic strip is a mesh. The induction welding tool comprises an induction welding tool surface. The induction welding tool surface is located proximate the second workpiece. The coil is located proximate the first workpiece. The coil is configured to energize with an electric current. The energized coil is configured to generate an electromagnetic field. The electromagnetic field is configured to induce a current which heats the first workpiece and the second workpiece at the welding region. The heat generated by the coil is configured to weld, by the induction welding tool, the second workpiece to the first workpiece at the welding region.

Optionally, the first workpiece may be a thermoplastic composite structure. In various embodiments, the thermoplastic composite structure may be configured to weld to the second workpiece. In various embodiments, the thermoplastic composite structure may comprise a skin.

Optionally, the second workpiece may be a stiffener. In various embodiments, the stiffener may comprise a stiffener cap. The stiffener may further comprise a stiffener web. In various embodiments, the stiffener may comprise a stiffener flange. In various embodiments, the stiffener flange may at least partially overlay the skin of the thermoplastic composite structure. In various embodiments, the stiffener flange may be configured to comprise the embedded mesh at the welding region.

Optionally, the heat generated by the coil may be configured to weld, by the induction welding tool, the stiffener flange to the skin of the thermoplastic composite structure.

### BRIEF DESCRIPTION OF THE DRAWINGS

FIG. 1 illustrates an aircraft turbine engine, in accordance with various embodiments;
FIG. 2 illustrates a portion of an aircraft fan cowl having a stiffener, in accordance with various embodiments;
FIG. 3A illustrates a cross-section view of a first workpiece at least partially overlayed by a second workpiece along an x-x axis, specifically a thermoplastic skin at least partially overlayed by a stiffener, in accordance with various embodiments falling outside the wording of the claims;
FIG. 3B illustrates a cross-section view of a flange of the stiffener at least partially overlaying a thermoplastic skin, in accordance with various embodiments falling outside the wording of the claims;
FIG. 4 illustrates an offset view of a stiffener at least partially overlaying a thermoplastic skin and a metal mesh at least partially overlaying a flange of the stiffener, in accordance with various embodiments falling outside the wording of the claims;
FIG. 5 illustrates a cross-section view of an induction welding system having a metal mesh at least partially overlaying a stiffener, in accordance with various embodiments falling outside the wording of the claims;
FIG. 6 illustrates a cross-section view of an induction welding system having a polymer material between a metal mesh and a stiffener, in accordance with various embodiments;
FIG. 7 illustrates an offset view of a stiffener at least partially overlaying a thermoplastic component and a metal mesh disposed within a flange of the stiffener, in accordance with various embodiments.
FIG. 8A illustrates a method of joining a first workpiece to a second workpiece, in accordance with various embodiments falling outside the wording of the claims;
FIG. 8B illustrates a method of joining a first workpiece to a second workpiece, in accordance with various embodiments;

### DETAILED DESCRIPTION

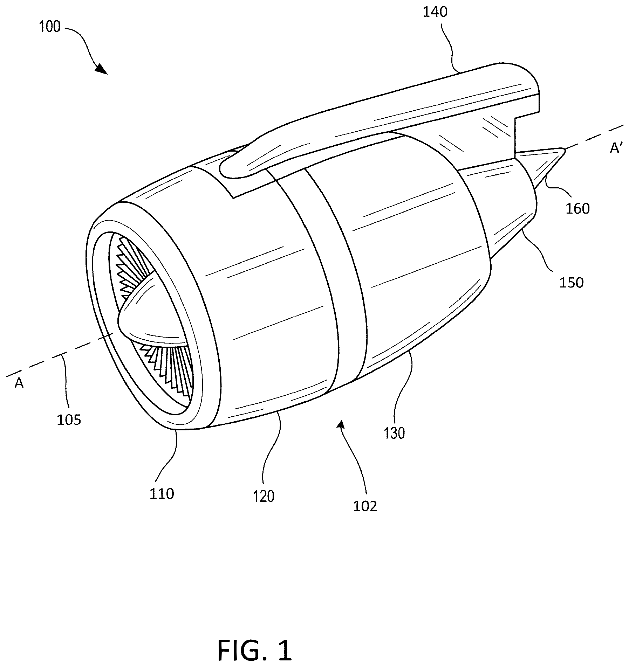

FIG. 1 illustrates a nacelle 100 for a gas turbine engine according to various embodiments. The nacelle for a gas turbine engine may be suitable for an aircraft. The nacelle 100 may comprise a centerline A-A' 105. Nacelle 100 may comprise an inlet 110, a fan cowl 120, and a thrust reverser 130. The fan cowl 120 may comprise a stiffener 102 configured to reinforce the fan cowl 120. Nacelle 100 may be coupled to a pylon 140, which may mount the nacelle 100 to an aircraft wing or aircraft body. A nozzle 150 may surround a center body 160, between which an engine exhaust stream exits to provide additional thrust.

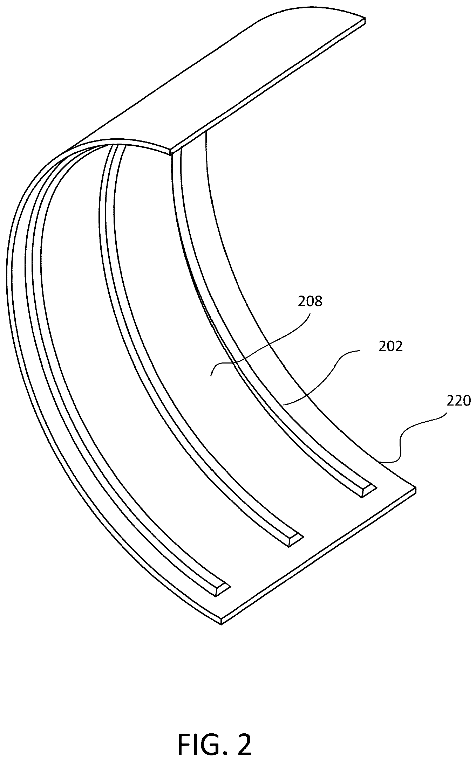

Referring to FIG. 2, a portion of an aircraft fan cowl 220 is illustrated according to various embodiments. In various embodiments, the fan cowl 220 may be comprised of a metal material, a thermoplastic, a thermoplastic composite material, or the like. In various embodiments, the fan cowl 220 may be a thermoplastic composite structure. In such embodiments, the fan cowl 220 may include at least one stiffener 202 formed along an inner surface or skin 208 of the fan cowl 220. The stiffener 202 may be formed along the skin 208 according to any desirable orientation, geometry, or symmetry, including, for example, a fully interconnected grid stiffening symmetry. A stiffener 202 in a fan cowl 220 is described, however, a stiffener 202 may be utilized in any other suitable aircraft structure, including for example, a fuselage, a wing, panels, and substructures thereof, and the like. In various embodiments, stiffeners as disclosed herein may be comprised of a thermoplastic, a thermoplastic composite, a metallic material, or the like. Stiffener 202 comprises a thermoplastic composite material.

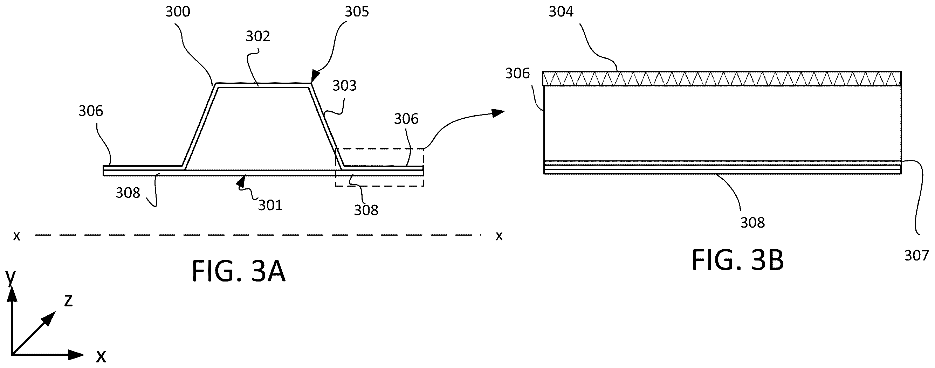

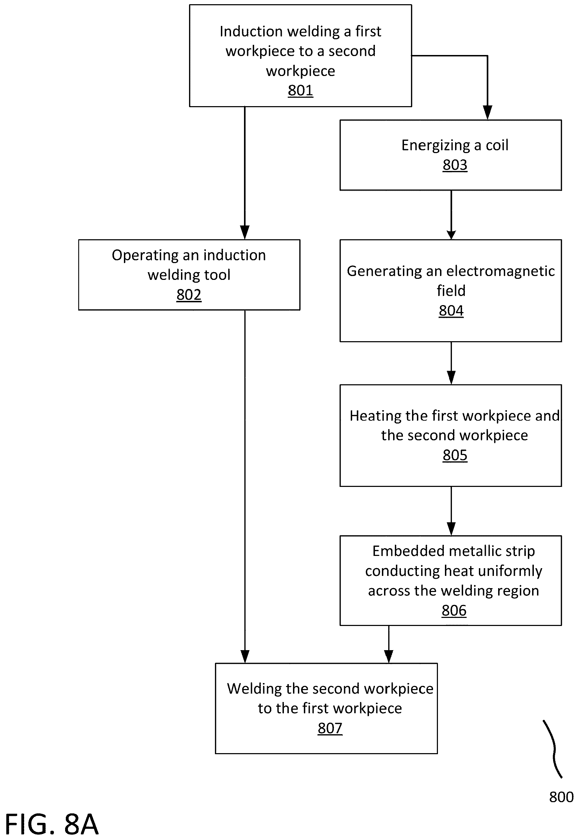

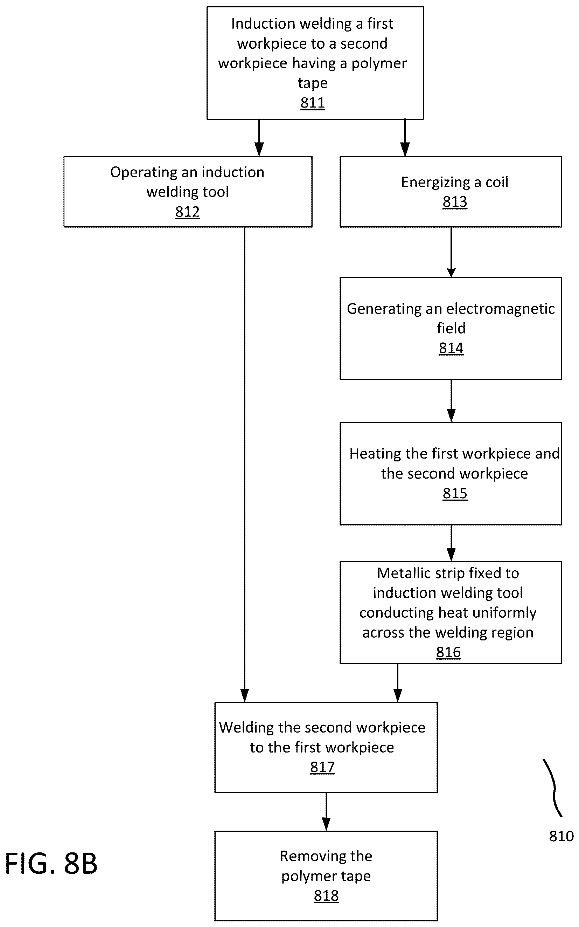

FIG. 3A illustrates a cross-section of a first workpiece 301 at least partially overlayed by a second workpiece 305 along an x-x axis in accordance with various embodiments. In various embodiments, and with additional reference to FIG. 8A, a method (step 800) of joining the first workpiece 301 to the second workpiece 305 may comprise induction welding (step 801) the second workpiece 305 to the first workpiece 301. In various embodiments, the first workpiece 301 may be a thermoplastic composite structure comprising a thermoplastic composite skin 308 and the second workpiece 305 may be a stiffener 300. In various embodiments, stiffeners as disclosed herein may be comprised of a thermoplastic, a thermoplastic composite, a metallic material, or the like. Stiffener 300 comprises a thermoplastic composite material. In various embodiments, the stiffener 300 may overlay or at least partially overlay the skin 308. In various embodiments, the stiffener 300 may comprise a stiffener cap 302, a stiffener web 303, and a stiffener flange 306. The stiffener web 303 may be offset from the skin 308, for example, at a substantially 45-degree angle. In various embodiments, the stiffener web 303 may be offset from the skin 308 at any desirable angle, or any angle suitable for reinforcing a thermoplastic composite structure. Referring to FIG. 3B, a cross-section of the stiffener flange 306 at least partially overlaying the skin 308 is shown according to various embodiments. In various embodiments, the stiffener flange 306 may be welded to the skin 308 at a welding region 307.

In continued reference to FIGS. 3A and 3B, welding may involve induction welding the stiffener 300 to the skin 308 at the welding region 307. Induction welding may generate heat that enables the skin 308 to bond to the stiffener 300. In various embodiments, the skin 308 may comprise a thermoplastic material, a thermoplastic composite material, or the like. Examples of thermoplastic composite materials for the stiffener 300 and skin 308 may include fiberglass, carbon fiber, aramid fiber, fiber-reinforced matrix systems, and the like. In various embodiments, the stiffener may comprise a metallic material. Examples of metallic materials for the stiffener 300 may include aluminum, aluminum alloys, iron alloys (e.g., various steel alloys) and the like.

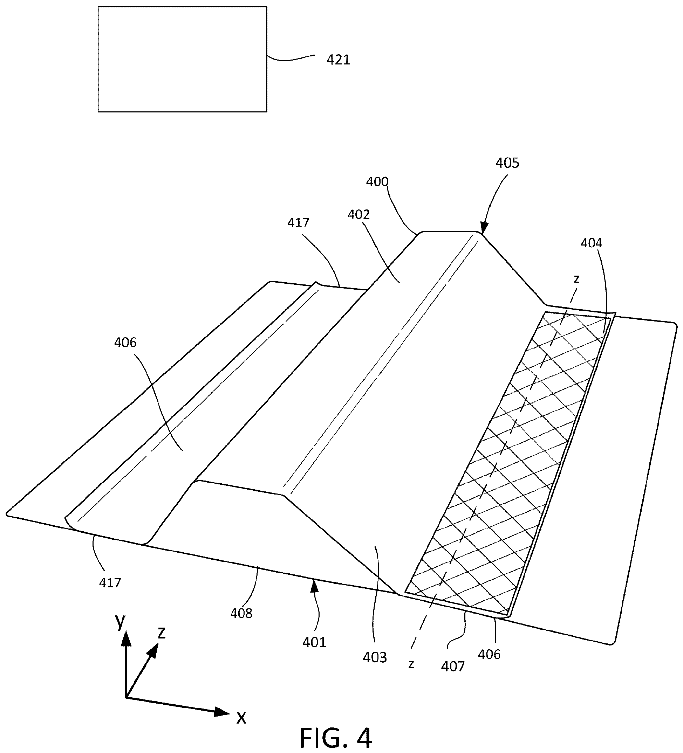

In various embodiments, and with additional reference to FIG. 4, a thermoplastic composite skin 408 may tend to degrade as the heat generated by induction welding reaches the edges 417 of a stiffener 400. This may be caused by inconsistent eddy currents generated along the skin 308, as well as inconsistent heat generation at the welding region 307. For example, in various embodiments, the skin 408 and stiffener 400 may comprise at least one thermoplastic composite ply. In various embodiments, the thickness of the skin 408 and stiffener 400 may vary, for example, between 0.01 inches (0.254 millimeters) to 0.1 inches (2.54 millimeters) in various embodiments, 0.015 inches (0.381 millimeters) to 0.08 inches (2.032 millimeters) in various embodiments, 0.02 inches (0.508 millimeters) to 0.04 inches (1.016 millimeters) in various embodiments, and 0.02 inches (0.508 millimeters) to 0.022 inches (0.5588 millimeters) in various embodiments. Stiffeners as disclosed herein may be comprised of a thermoplastic, a thermoplastic composite, a metallic material, or the like. Stiffener 400 comprises a thermoplastic composite material.

The composite skin 408 and stiffener 400, and associated thickness, may determine the amount of heat associated with joining the skin 408 to the stiffener 400 using induction welding. Accordingly, every skin 408/stiffener 400 configuration requires careful selection of an applied induction welding current, as well as adjustments to welding speed. Thus, the lack of uniform skin 408/stiffener 400 thickness and undesirable eddy current generation may result in inconsistent heat generation, increased processing time to modify the induction welding process, and an increased risk of skin 408 and/or stiffener 400 degradation.

Accordingly, in various embodiments, and in further reference to FIG. 4, the method of joining a first workpiece 401 to a second workpiece 405 includes a second workpiece 405 having an embedded metallic strip 404 at the welding region 407. In various embodiments, the metallic strip 404 may be configured to conduct (step 806) heat uniformly across the welding region 407 during induction welding. Accordingly, the metallic strip 404 may enable faster and more controlled processing time for a given induction welding process. In various embodiments, the metallic strip 404 may prevent eddy current generation in the thermoplastic composite skin 408. The temperature of the induction weld may be governed by the properties of the metallic strip 404, such as, for example, the density of the metallic strip 404. In various embodiments, the metallic strip 404 may be a continuous surface 421 (i.e., solid sheet). In various embodiments, the metallic strip 404 may be a mesh (i.e., grating), and the like. In various embodiments, the mesh 404 may interfere with electromagnetic fields across the mesh and prevent a magnetic flux across its surface. This may be a function of the size of the mesh pores, the wavelength of the electromagnetic wave, and the conductivity of the mesh.

In various embodiments where the second workpiece 405 is a thermoplastic composite stiffener 400 and the first workpiece 401 is a thermoplastic composite skin 408, the metallic strip 404 may be configured to conduct heat uniformly along the z-z axis of the stiffener flange 406 during the induction welding process. Unlike the skin 408/stiffener 400 combination, which may have varied thickness and electrical conductivity properties that complicate the induction welding process and increases processing time, the mesh 404 may comprise a thickness tailored to the specific needs of an induction welding process. In various embodiments, the mesh 404 may be tailored for a specific temperature delivery at the welding region 407.

Moreover, in various embodiments, the mesh 404 may be tailored based on conductivity and pore size. Pore geometry in a mesh 404 may be of any suitable geometry, such as, for example, a square, rectangle, circle, parallelogram, rhombus, and the like. The pore size may be tailored to be, at least, smaller than the wavelength of a given electromagnetic wave used in the induction welding process. A benefit of using the mesh 404 to join the stiffener 400 to the skin 408 using induction welding is that a weld temperature will depend on the electrical conductivity properties, such as the thickness and pore size of the mesh 404, rather than the properties of the thermoplastic composite skin 408 or stiffener 400. Accordingly, the mesh 404 may be configured to shield the skin 408 from electromagnetic waves and prevent eddy current formation along the skin 408. In various embodiments, the mesh 404 may comprise any conductive metallic material. In various embodiments, the mesh 404 may comprise copper, aluminum, gold, silver, and the like.

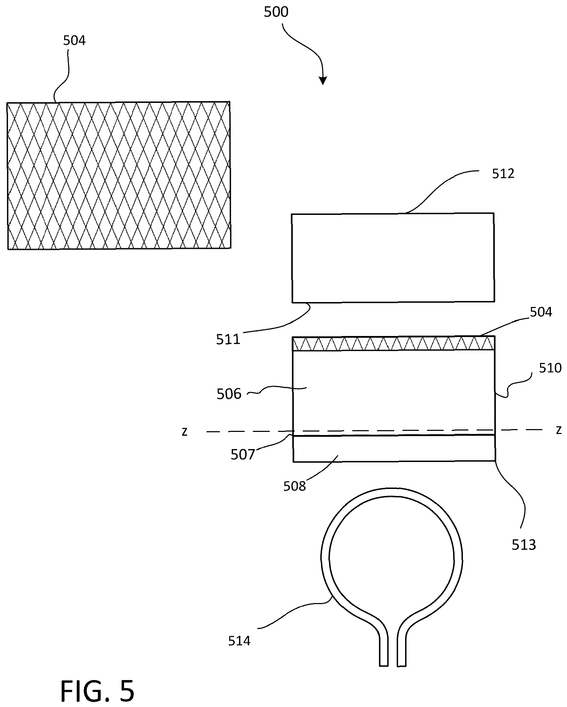

In various embodiments, and with further reference to FIG. 5, the mesh 504 may be configured to embed in the stiffener flange 506 at a surface of the flange 506 that is distal to the welding region 507. Accordingly, and in various embodiments, the stiffener flange 506 may be prefabricated with the mesh 504 prior to induction welding. Moreover, embedding the mesh 504 at a surface of the flange 506 that is distal to the welding region 507 may prevent the mesh 504 from becoming a structural component of the bonded materials.

With reference to FIG. 5, a cross-section of an induction welding apparatus 500 is shown. In various embodiments, the induction welding apparatus 500 may comprise an induction welding tool 512. The induction welding tool 512 may have an induction welding tool surface 511 configured to operate (step 802) on at least one workpiece. As shown, the apparatus 500 may further comprise a first workpiece 513 and a second workpiece 510. In various embodiments, the first workpiece 513 may be a thermoplastic composite structure. In various embodiments, the second workpiece 510 may be a thermoplastic composite stiffener. In various embodiments, the stiffener may comprise an embedded metallic strip 504. In various embodiments, the metallic strip 504 may be a mesh. In various embodiments, the apparatus 500 may comprise a coil 514 located proximate the thermoplastic composite structure 513.

In various embodiments, the coil 514 may be configured to energize (step 803) with an electric current, for example, an alternating electric current. The energized coil 514 may be configured to generate (step 804) an electromagnetic field that induces a current which heats (step 805) the apparatus 500. In continued reference to FIG. 5 and with additional reference to FIG. 4, in various embodiments, the heat generated by the coil 514 may be configured to enable the induction welding tool 512 to weld (step 807) the stiffener 510 to the thermoplastic structure 513 along the z-z axis at a welding region 507.

In various embodiments, with continued reference to FIG. 5 and additional reference to FIG. 4, the thermoplastic composite structure 513 may comprise a skin 508. In various embodiments, the stiffener 510 may comprise a stiffener cap 402, a stiffener web 403, and, as shown in FIG. 5, a stiffener flange 506. Stiffeners as disclosed herein may be comprised of a thermoplastic, a thermoplastic composite, a metallic material, or the like. Stiffener 510 comprises a thermoplastic composite material. As shown in FIG. 5, the stiffener flange 506 may overlay or at least partially overlay the skin 508 of the thermoplastic composite structure 513. In various embodiments, the stiffener flange 506 may comprise an embedded mesh 504.

In various embodiments, the heat generated by the coil 514 may be configured to weld the stiffener flange 506 to the skin 508 of the thermoplastic structure 513. In various embodiments, the mesh 504 embedded in the stiffener flange 506 may be configured to conduct heat uniformly across the welding region 507.

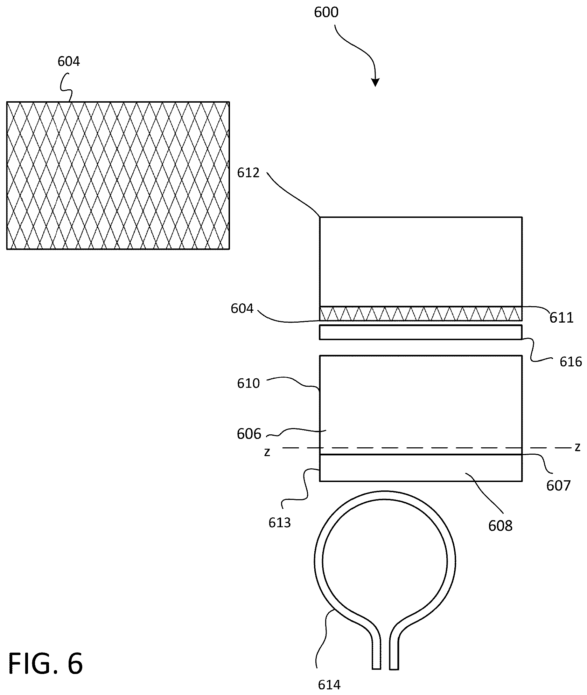

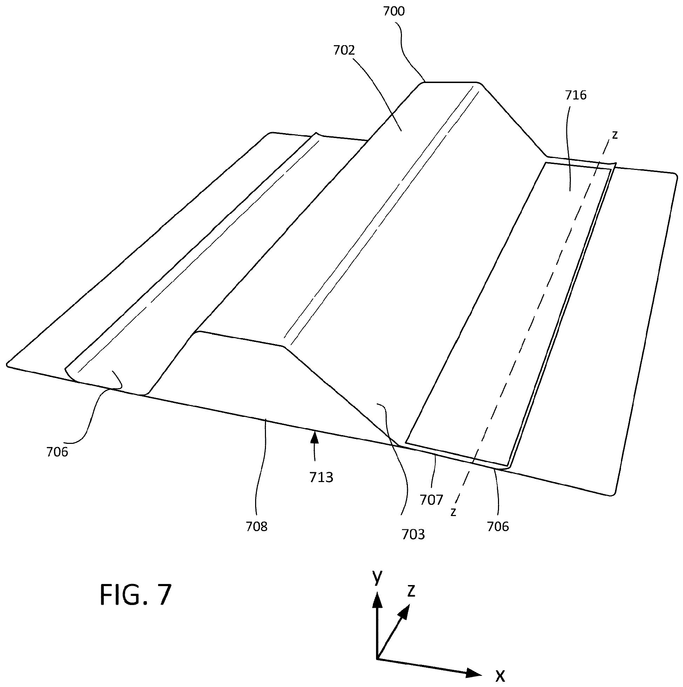

In various embodiments, and with reference to FIGS. 6 and 7, a method (810) of joining a first workpiece (613 and 713) to a second workpiece (610 and 700) is disclosed herein. In various embodiments, the method of joining the first workpiece (613 and 713) to the second workpiece (610 and 700) may comprise induction welding (step 811) the second workpiece (610 and 700) to the first workpiece (613 and 713). In various embodiments, the first workpiece may be a thermoplastic composite structure (613 and 713) comprising a thermoplastic composite skin (608 and 708) and the second workpiece may be a stiffener (610 and 700). Stiffeners as disclosed herein may be comprised of a thermoplastic, a thermoplastic composite, a metallic material, or the like. Stiffener (610 and 700) comprises a thermoplastic composite material. In various embodiments, the stiffener (610 and 700) may overlay or at least partially overlay the thermoplastic structure 613 and skin (608 and 708). In various embodiments, the stiffener (610 and 700) may comprise a stiffener cap 702, a stiffener web 703, and a stiffener flange (606 and 706). In various embodiments, the stiffener flange (606 and 706) may overlay or at least partially overlay the skin (608 and 708).

In continued reference to FIGS. 6 and 7, welding may involve induction welding the stiffener flange 606 to the skin 608 at the welding region 607 using an induction welding tool 612 located proximate the stiffener flange 606. The induction welding tool 612 may be configured to operate (step 812) on at least one workpiece. The induction welding tool 612 may have an induction welding tool surface 611.

Induction welding may generate heat that enables the skin 608 to weld to the stiffener flange 606. In various embodiments, a coil 614 located proximate the thermoplastic structure 613 may be configured to energize (step 813) with an electric current. The energized coil 614 may be configured to generate (step 814) an electromagnetic field and magnetic flux across the surface of the thermoplastic structure 613 and stiffener 610, inducing a current which heats (step 815) the thermoplastic structure 613 and the stiffener 610. In various embodiments, the heat generated by the coil 614 may be configured to enable the induction welding tool 612 to weld (step 817) the stiffener 610 to the thermoplastic structure 613 at a welding region 607.

In various embodiments, the method of joining the first workpiece (613 and 713) to the second workpiece (610 and 700) may further comprise a polymer tape (616 and 716) at least partially overlaying the second workpiece (610 and 700). In various embodiments, the polymer tape 616 may be disposed between the second workpiece 610 and a metallic strip 604. In various embodiments, the metallic strip 604 may be a mesh. In various embodiments, the mesh 604 may be fixed or otherwise coupled to the induction welding tool surface 611.

In various embodiments, the second workpiece is the stiffener (610 and 700) and the first workpiece is the thermoplastic structure (613 and 713) with skin (608 and 708). The polymer tape (616 and 716) may overlay or at least partially overlay the stiffener flange (606 and 706). Accordingly, the polymer tape 616 may be disposed between the stiffener flange 606 and the mesh 604. In various embodiments, the polymer tape (616 and 716) may be removable. In various embodiments, the method of joining the first workpiece (613 and 713) to the second workpiece (610 and 700) may further comprise removing (step 818) the polymer tape (616 and 716) from the welding region (607 and 707) after induction welding. In various embodiments, the polymer tape (616 and 716) may comprise any suitable polymer material that resists sticking upon heating, such as, for example, polytetrafluoroethylene (PTFE), polyoxymethylene, polychlorotrifluoroethylene (PCTFE), perfluoroalkoxy (PFA), tetrafluoroethylene-perfluoropropylene (FEP), and the like.

In various embodiments, the mesh 604 may be configured to conduct (step 816) heat uniformly across the welding region 607 during induction welding. Accordingly, the mesh 604 may enable faster and more controlled processing time for a given induction welding process. In various embodiments, the mesh 604 may prevent eddy current generation in the thermoplastic composite skin 608. Accordingly, the temperature of the induction weld may be governed by the properties of the mesh 604, such as, for example, the density and pore size of the mesh 604.

As applied to embodiments where the second workpiece (610 and 700) includes a stiffener flange (606 and 706), and the first workpiece (613 and 713) is a thermoplastic composite skin (608 and 708), the metallic strip 604 may be configured to conduct heat uniformly along the z-z axis of the stiffener flange (606 and 706) during the induction welding process. In various embodiments, the mesh 604 may be tailored based on conductivity. In various embodiments, the mesh 604 may comprise any conductive metallic material. In various embodiments, the mesh 604 may comprise copper. In various embodiments, the mesh 604 may be tailored for a specific temperature delivery at the welding region (607 and 707).

A benefit of using the mesh 604 to join the stiffener flange (606 and 706) to the skin (608 and 708) using induction welding is that a weld temperature will depend on the electrical conductivity properties, such as the thickness and pore size, of the mesh 604, rather than the properties of the thermoplastic composite skin (608 and 708) or stiffener flange (606 and 706). Accordingly, the mesh 604 may be configured to shield the skin (608 and 708) from electromagnetic waves and prevent eddy current formation along the skin 408.

Additionally, utilizing a removable polymer tape (616 and 716) between the mesh 604 and the second workpiece (610 and 700) prevents the mesh 604 from being welded into the structure of the second workpiece (610 and 700), and enables re-use of the mesh 604 on the induction tool surface 611 for successive welding operations.

## Claims

1. A method (810) of joining a first workpiece (613, 713) to a second workpiece (610, 700), the method (810) comprising:
induction welding the first workpiece (613, 713) to the second workpiece (610, 700), wherein the second workpiece (610, 700) at least partially overlays the first workpiece (613, 713), wherein a polymer tape (616, 716) at least partially overlays the second workpiece (610, 700), wherein the polymer tape (616, 716) is disposed between the second workpiece (610, 700) and a metallic strip (604), wherein the induction welding is at a welding region (607, 707), wherein the induction welding further comprises:
operating an induction welding tool (612) at the welding region (607, 707), wherein the induction welding tool (612) comprises an induction welding tool surface (611), wherein the induction welding tool surface (611) is located proximate the second workpiece (610, 700); and
energizing a coil (614) located proximate the first workpiece (613, 713), wherein the coil (614) is configured to energize with an electric current, wherein the energized coil (614) is configured to generate an electromagnetic field, wherein the electromagnetic field is configured to induce a current which heats the first workpiece (613, 713) and the second workpiece (610, 700) at the welding region (607, 707), wherein the heat generated by the coil (614) is configured to weld, by the induction welding tool (612), the second workpiece (610, 700) to the first workpiece (613, 713) at the welding region (607, 707), wherein the metallic strip (604) is configured to conduct the heat generated by the coil (614) uniformly across the welding region (607, 707); and
removing the polymer tape (616, 716) from the second workpiece (610, 700) after induction welding.

2. The method (810) of claim 1, wherein the metallic strip (604) is a mesh.

3. The method (810) of claim 1 or 2, wherein the induction welding the first workpiece (613, 713) to the second workpiece (610, 700) further comprises induction welding a thermoplastic composite structure (613, 713) to the second workpiece (610, 700), wherein the thermoplastic composite structure (613, 713) further comprises a skin (608, 708), wherein the skin (608, 708) is configured to weld to the second workpiece (610, 700).

4. The method (810) of claim 3, wherein the induction welding the thermoplastic composite structure (613, 713) to the second workpiece (610, 700) further comprises induction welding the thermoplastic composite structure (613, 713) to a stiffener (610, 700).

5. The method (810) of claim 4, wherein the induction welding the thermoplastic composite structure (613, 713) to the stiffener (610, 700) further comprises the stiffener (610, 700) comprising:
a stiffener cap (702);
a stiffener web (703); and
a stiffener flange (606, 706), wherein the stiffener flange (606, 706) is configured to weld to the thermoplastic composite structure (613, 713).

6. The method (810) of claim 5, wherein the induction welding the stiffener flange (606, 706) to the thermoplastic composite structure (613, 713) further comprises the stiffener flange (606, 706) at least partially overlaying the skin (608, 708) of the thermoplastic composite structure (613, 713), wherein the stiffener flange (606, 706) is configured to weld to the skin (608, 708) of the thermoplastic composite structure (613, 713) at the welding region (607, 707).

7. The method (810) of claim 6, wherein the induction welding the stiffener flange (606, 706) to the skin (608, 708) at the welding region (607, 707) further comprises disposing the polymer tape (616, 716) at the welding region (607, 707), wherein the polymer tape (616, 716) at least partially overlays the stiffener flange (606, 706), wherein the polymer tape comprises at least one of polytetrafluoroethylene (PTFE), polyoxymethylene, polychlorotrifluoroethylene (PCTFE), perfluoroalkoxy (PFA), tetrafluoroethylene-perfluoropropylene (FEP).

8. The method (810) of claim 6 or 7, wherein:
the induction welding the stiffener flange (606, 706) to the skin (608, 708) further comprises energizing the coil (614), wherein the energized coil (614) is configured to generate the electromagnetic field, wherein the electromagnetic field is configured to induce a current which heats the stiffener flange (606, 706) and the skin (608, 708) at the welding region (607, 707), wherein the heat generated by the coil (614) is configured to weld, by the induction welding tool (612), the stiffener flange (606, 706) to the skin (608, 708) at the welding region (607, 707).

9. The method (810) of any of claims 6 to 8, wherein the induction welding the stiffener flange (606, 706) to the skin (608, 708) further comprises the metallic strip (604) being a mesh fixed to the induction welding tool surface (611).

10. The method (810) of any of claims 6 to 9, wherein the induction welding the stiffener flange (606, 706) to the skin (608, 708) at the welding region (607, 707) further comprises disposing the polymer tape (616, 716) between the stiffener flange (606, 706) and the metallic strip (604), wherein the polymer tape (616, 716) is configured to be removed from the stiffener flange (606, 706) after induction welding.

## Patentansprüche

1. Verfahren (810) zum Verbinden eines ersten Werkstücks (613, 713) mit einem zweiten Werkstück (610, 700), wobei das Verfahren (810) Folgendes umfasst:
Induktionsschweißen des ersten Werkstücks (613, 713) an das zweite Werkstück (610, 700), wobei das zweite Werkstück (610, 700) das erste Werkstück (613, 713) mindestens teilweise überlagert, wobei ein Polymerstreifen (616, 716) das zweite Werkstück (610, 700) mindestens teilweise überlagert, wobei der Polymerstreifen (616, 716) zwischen dem zweiten Werkstück (610, 700) und einem Metallband (604) angeordnet ist, wobei das Induktionsschweißen in einem Schweißbereich (607, 707) erfolgt, wobei das Induktionsschweißen ferner Folgendes umfasst:
Betreiben eines Induktionsschweißwerkzeugs (612) in dem Schweißbereich (607, 707), wobei das Induktionsschweißwerkzeug (612) eine Induktionsschweißwerkzeugoberfläche (611) umfasst, wobei sich die Induktionsschweißwerkzeugoberfläche (611) in der Nähe des zweiten Werkstücks (610, 700) befindet; und
Speisen einer Spule (614), die sich in der Nähe des ersten Werkstücks (613, 713) befindet, wobei die Spule (614) konfiguriert ist, um mit elektrischem Strom gespeist zu werden, wobei die gespeiste Spule (614) konfiguriert ist, um ein elektromagnetisches Feld zu erzeugen, wobei das elektromagnetische Feld konfiguriert ist, um einen Strom zu induzieren, der das erste Werkstück (613, 713) und das zweite Werkstück (610, 700) in dem Schweißbereich (607, 707) erwärmt, wobei die durch die Spule (614) erzeugte Wärme konfiguriert ist, das zweite Werkstück (610, 700) durch das Induktionsschweißwerkzeug (612) an das erste Werkstück (613, 713) in dem Schweißbereich (607, 707) zu schweißen, wobei das Metallband (604) konfiguriert ist, um die durch die Spule (614) erzeugte Wärme gleichmäßig über den Schweißbereich (607, 707) zu leiten; und
Entfernen des Polymersteifens (616, 716) von dem zweiten Werkstück (610, 700) nach dem Induktionsschweißen.

2. Verfahren (810) nach Anspruch 1, wobei das Metallband (604) ein Netzgewebe ist.

3. Verfahren (810) nach Anspruch 1 oder 2, wobei das Induktionsschweißen des ersten Werkstücks (613, 713) an das zweite Werkstück (610, 700) ferner Induktionsschweißen einer thermoplastischen Verbundstruktur (613, 713) an das zweite Werkstück (610, 700) umfasst, wobei die thermoplastische Verbundstruktur (613, 713) ferner eine Randschicht (608, 708) umfasst, wobei die Randschicht (608, 708) konfiguriert ist, um an das zweite Werkstück (610, 700) geschweißt zu werden.

4. Verfahren (810) nach Anspruch 3, wobei das Induktionsschweißen der thermoplastischen Verbundstruktur (613, 713) an das zweite Werkstück (610, 700) ferner Induktionsschweißen der thermoplastischen Verbundstruktur (613, 713) an eine Versteifung (610, 700) umfasst.

5. Verfahren (810) nach Anspruch 4, wobei das Induktionsschweißen der thermoplastischen Verbundstruktur (613, 713) an die Versteifung (610, 700) ferner umfasst, dass die Versteifung (610, 700) Folgendes umfasst:
eine Versteifungskappe (702);
einen Versteifungssteg (703); und
einen Versteifungsflansch (606, 706), wobei der Versteifungsflansch (606, 706) konfiguriert ist, um an die thermoplastische Verbundstruktur (613, 713) geschweißt zu werden.

6. Verfahren (810) nach Anspruch 5, wobei das Induktionsschweißen des Versteifungsflansches (606, 706) an die thermoplastische Verbundstruktur (613, 713) ferner umfasst, dass der Versteifungsflansch (606, 706) die Randschicht (608, 708) der thermoplastischen Verbundstruktur (613, 713) mindestens teilweise überlagert, wobei der Versteifungsflansch (606, 706) konfiguriert ist, um an die Randschicht (608, 708) der thermoplastischen Verbundstruktur (613, 713) in dem Schweißbereich (607, 707) geschweißt zu werden.

7. Verfahren (810) nach Anspruch 6, wobei das Induktionsschweißen des Versteifungsflansches (606, 706) an die Randschicht (608, 708) in dem Schweißbereich (607, 707) ferner Anordnen des Polymerstreifens (616, 716) in dem Schweißbereich (607, 707) umfasst, wobei der Polymerstreifen (616, 716) den Versteifungsflansch (606, 706) mindestens teilweise überlagert, wobei der Polymerstreifen mindestens eines von Polytetrafluorethylen (PTFE), Polyoxymethylen, Polychlortrifluorethylen (PCTFE), Perfluoralkoxy (PFA), Tetrafluorethylen-Perfluorpropylen (FEP) umfasst.

8. Verfahren (810) nach Anspruch 6 oder 7, wobei:
das Induktionsschweißen des Versteifungsflansches (606, 706) an die Randschicht (608, 708) ferner Speisen der Spule (614) umfasst, wobei die gespeiste Spule (614) konfiguriert ist, um das elektromagnetische Feld zu erzeugen, wobei das elektromagnetische Feld konfiguriert ist, um einen Strom zu induzieren, der den Versteifungsflansch (606, 706) und die Randschicht (608, 708) in dem Schweißbereich (607, 707) erwärmt, wobei die durch die Spule (614) erzeugte Wärme konfiguriert ist, um den Versteifungsflansch (606, 706) durch das Induktionsschweißwerkzeug (612) an die Randschicht (608, 708) in dem Schweißbereich (607, 707) zu schweißen.

9. Verfahren (810) nach einem der Ansprüche 6 bis 8, wobei das Induktionsschweißen des Versteifungsflansches (606, 706) an die Randschicht (608, 708) ferner umfasst, dass das Metallband (604) ein an der Induktionsschweißwerkzeugoberfläche (611) befestigtes Netzgewebe ist.

10. Verfahren (810) nach einem der Ansprüche 6 bis 9, wobei das Induktionsschweißen des Versteifungsflansches (606, 706) an die Randschicht (608, 708) in dem Schweißbereich (607, 707) ferner Anordnen des Polymerstreifens (616, 716) zwischen dem Versteifungsflansch (606, 706) und dem Metallband (604) umfasst, wobei der Polymerstreifen (616, 716) konfiguriert ist, um nach dem Induktionsschweißen von dem Versteifungsflansch (606, 706) entfernt zu werden.

## Revendications

1. Procédé (810) d'assemblage d'une première pièce (613, 713) à une deuxième pièce (610, 700), le procédé (810) comprenant :
le soudage par induction de la première pièce (613, 713) à la seconde pièce (610, 700), la seconde pièce (610, 700) recouvrant au moins partiellement la première pièce (613, 713), un ruban polymère (616, 716) recouvrant au moins partiellement la seconde pièce (610, 700), le ruban polymère (616, 716) étant disposé entre la seconde pièce (610, 700) et une bande métallique (604), le soudage par induction étant réalisé dans une zone de soudage (607, 707), le soudage par induction comprenant en outre :
l'actionnement d'un outil de soudage par induction (612) dans la zone de soudage (607, 707), l'outil de soudage par induction (612) comprenant une surface d'outil de soudage par induction (611), la surface d'outil de soudage par induction (611) étant située à proximité de la seconde pièce (610, 700) ; et
l'excitation d'une bobine (614) située à proximité de la première pièce (613, 713), la bobine (614) étant configurée pour être excitée par un courant électrique, la bobine excitée (614) étant configurée pour générer un champ électromagnétique, le champ électromagnétique étant configuré pour induire un courant qui chauffe la première pièce (613, 713) et la seconde pièce (610, 700) au niveau de la zone de soudage (607, 707), la chaleur générée par la bobine (614) étant configurée pour souder, par l'outil de soudage par induction (612), la seconde pièce (610, 700) à la première pièce (613, 713) au niveau de la zone de soudage (607, 707), la bande métallique (604) étant configurée pour conduire la chaleur générée par la bobine (614) uniformément à travers la zone de soudage (607, 707) ; et
le retrait du ruban polymère (616, 716) de la deuxième pièce (610, 700) après le soudage par induction.

2. Procédé (810) selon la revendication 1, dans lequel la bande métallique (604) est une maille.

3. Procédé (810) selon la revendication 1 ou 2, dans lequel le soudage par induction de la première pièce (613, 713) à la seconde pièce (610, 700) comprend en outre le soudage par induction d'une structure composite thermoplastique (613, 713) à la seconde pièce (610, 700), la structure composite thermoplastique (613, 713) comprenant en outre une peau (608, 708), la peau (608, 708) étant configurée pour être soudée à la seconde pièce (610, 700).

4. Procédé (810) selon la revendication 3, dans lequel le soudage par induction de la première structure composite thermoplastique (613, 713) à la seconde pièce (610, 700) comprend en outre le soudage par induction de la première structure composite thermoplastique (613, 713) à un raidisseur (610, 700).

5. Procédé (810) selon la revendication 4, dans lequel le soudage par induction de la structure composite thermoplastique (613, 713) au raidisseur (610, 700) comprend en outre le raidisseur (610, 700) comprenant :
un capuchon de raidisseur (702) ;
une âme de raidisseur (703) ; et
une bride de raidisseur (606, 706), la bride de raidisseur (606, 706) étant configurée pour se souder à la première structure composite thermoplastique (613, 713).

6. Procédé (810) selon la revendication 5, dans lequel le soudage par induction de la bride de raidisseur (606, 706) à la première structure composite thermoplastique (613, 713) comprend en outre la bride de raidisseur (606, 706) recouvrant au moins partiellement la peau (608, 708) de la première structure composite thermoplastique (613, 713), la bride de raidisseur (606, 706) étant configurée pour se souder à la peau (608, 708) de la première structure composite thermoplastique (613, 713) au niveau de la zone de soudage (607, 707).

7. Procédé (810) selon la revendication 6, dans lequel le soudage par induction de la bride de raidisseur (606, 706) à la peau (608, 708) au niveau de la zone de soudage (607, 707) comprend en outre la disposition du ruban polymère (616, 716) au niveau de la zone de soudage (607, 707), le ruban polymère (616, 716) recouvrant au moins partiellement la bride de raidisseur (606, 706), le ruban polymère comprenant au moins un des polymères suivants : polytétrafluoroéthylène (PTFE), polyoxyméthylène, polychlorotrifluoroéthylène (PCTFE), perfluoroalcoxy (PFA), tétrafluoroéthylène-perfluoropropylène (FEP).

8. Procédé (810) selon la revendication 6 ou 7, dans lequel :
le soudage par induction de la bride de raidisseur (606, 706) à la peau (608, 708) comprend en outre l'excitation de la bobine (614), la bobine (614) étant configurée pour générer le champ électromagnétique, le champ électromagnétique étant configuré pour induire un courant qui chauffe la bride de raidisseur (606, 706) et la peau (608, 708) au niveau de la zone de soudage (607, 707), la chaleur générée par la bobine (614) étant configurée pour souder, par l'outil de soudage par induction (612), la bride de raidisseur (606, 706) à la peau (608, 708) au niveau de la zone de soudage (607, 707).

9. Procédé (810) selon l'une quelconque des revendications 6 à 8, dans lequel le soudage par induction de la bride de raidisseur (606, 706) à la peau (608, 708) comprend en outre la bande métallique (604) étant un treillis fixé à la surface d'outil de soudage par induction (611).

10. Procédé (810) selon l'une quelconque des revendications 6 à 9, dans lequel le soudage par induction de la bride de raidisseur (606, 706) à la peau (608, 708) dans la zone de soudage (607, 707) comprend en outre la disposition du ruban polymère (616, 716) entre la bride de raidisseur (606, 706) et la bande métallique (604), le ruban polymère (616, 716) étant configuré pour être retiré de la bride de raidisseur (606, 706) après le soudage par induction.
